# EUROPEAN PATENT SPECIFICATION

(11) **EP 0 664 748 B1**
(45) Date of publication and mention of the grant of the patent: **04.06.1997**
(21) Application number: 93923603.0
(22) Date of filing: 22.10.1993
(51) Int. Cl.: B60R 7/02, B63B 25/24

(54) **DEVICE FOR SUPPORTING SHOPPING BAGS AND THE LIKE**
VORRICHTUNG ZUM HALTEN VON EINKAUFSTASCHEN ODER DERGLEICHEN
DISPOSITIF SUPPORT POUR SACS A PROVISIONS ET ASSIMILES

(30) Priority: 26.10.1992 GB 9222420
(43) Date of publication of application: 02.08.1995
(73) Proprietor: ROAST, Colin Geoffrey, Northampton NN4 9RW (GB)
(72) Inventor: ROAST, Colin Geoffrey, Northampton NN4 9RW (GB)
(74) Representative: Dawson, Elizabeth Ann
(86) International application number: GB9302185
(87) International publication number: WO9410006

(56) References cited:
- WO-A-89/00117
- US-A- 5 050 825
- US-A- 5 234 116

## Description

This invention relates to a device for supporting shopping bags and the like as defined in the preamble of claim 1 (an example thereof is shown and described in WO-A-89/00117), and in the preferred embodiment provides a device which, when not in use, can be stored in an unobtrusive flat configuration yet which can readily be erected to provide support for a multiplicity of shopping bags within the luggage space of a motor vehicle.

It is a well recognised problem that if a multiplicity of laden shopping bags are placed within the luggage space of a vehicle which is then driven some distance from the place of loading, the bags will tend to fall over and the contents spill from the bags. This not only results in inconvenience to the shopper since the bags must be re-packed before they can be removed from the vehicle, but may result in damage to the products contained in the bags, and may, in the event of an accident involving the vehicle, result in loose products, e.g. tins and bottles, being thrown around within the vehicle with the result of possible injury to the occupants.

Various devices have been proposed hitherto for supporting shopping bags in the luggage space of a vehicle. One example is shown in US-A-5050825 which includes a plurality of generally planar upstanding members arranged in fixed positions on a flat base, having protrusions at their upper edges on which the handles of carrier bags may be hooked. Another example is shown in US-A-5234116 which has been published after the priority date of the present application and which includes a folding structure having upstanding legs supporting carrier means made of flexible sheet material. The carrier means have the form of rectangular box shapes in the erect configuration, the bases of the box shapes resting on the supporting surface in use.

In accordance with an aspect of the present invention there is provided a device for supporting shopping bags or the like comprising a support formed by a plurality of upstanding wall members and collapsible carrier means connected or connectable to the upstanding wall members characterised in that the upstanding wall members have means at their upper edges for supporting carrier bag handles and the upstanding members are connected in use by the carrier means such that with the upstanding wall members positioned on a supporting surface a load placed on the carrier means will impose at least a downwardly directed force component on at least some of the upstanding wall members and will draw at least some of the upstanding wall members towards the load.

Preferably the carrier means are suspended from the upstanding members.

Preferably the upstanding members comprise wall members which may be connected edge to edge, e.g.: hingedly.

Preferably the wall members may be placed in a storage configuration in which they lie atop one another, and may be manipulated from this configuration into a use configuration in which the wall members form an open-sided enclosure. The collapsible carrier means is positioned to receive a load which will preferably additionally impose an inwardly directed force on at least those wall members located at the open edges of the enclosure whereby those wall members will be drawn towards the load and the wall members, flexible carrier, and load will form a stable structure.

In a particularly preferred embodiment of the invention there are three wall members each of which may be in the form of a plastics panel. The centre wall member is hingedly interconnected to each end wall member along the longitudinal edges of the centre wall member and the adjacent longitudinal edges of the side wall members. The carrier means may comprise a net which is secured to each wall member slightly below the vertical centre of the wall members. The carrier may be sized such that when carrying the load it will deform so as to reach the plane defined by the lower edges of the wall members.

In another preferred embodiment of the invention, the carrier means simply comprise one or more straps whose length is adjustable, whereby the device may be modified according to the load it is to contain.

Such a device may be stored in a car in a flat configuration and, in this configuration, will take up a minimal amount of space. When required for use, the wall members are manipulated into the use configuration and a load is applied to the flexible carrier.

Preferably, the upper edges of the wall members are provided with means for securing the handles of a carrier bag. If a carrier bag of goods is placed on the flexible carrier and the handles secured to the upper edges of the wall members a stable package is formed which will stand on the floor of the vehicle to retain the load and prevent movement of the load during cornering and braking.

More importantly, the handles of additional carriers can be secured outside the wall member so that several carrier bags can be stabilised by a single device according to the invention.

In a particularly preferred embodiment of the invention the wall members may be manipulated into a configuration in which two of the wall members are co-planar and the third wall member extends at an angle to the other two to provide a stand for supporting the two co-planar wall members in a substantially vertical position. In this case, a hazard warning triangle can conveniently be formed on the two co-planar wall members so that the device may be used as a vehicle hazard warning notice.

The above and other features and advantages of the invention will become clear from the following description of a preferred embodiment thereof, given by way of example only, reference being had to the accompanying drawings wherein:

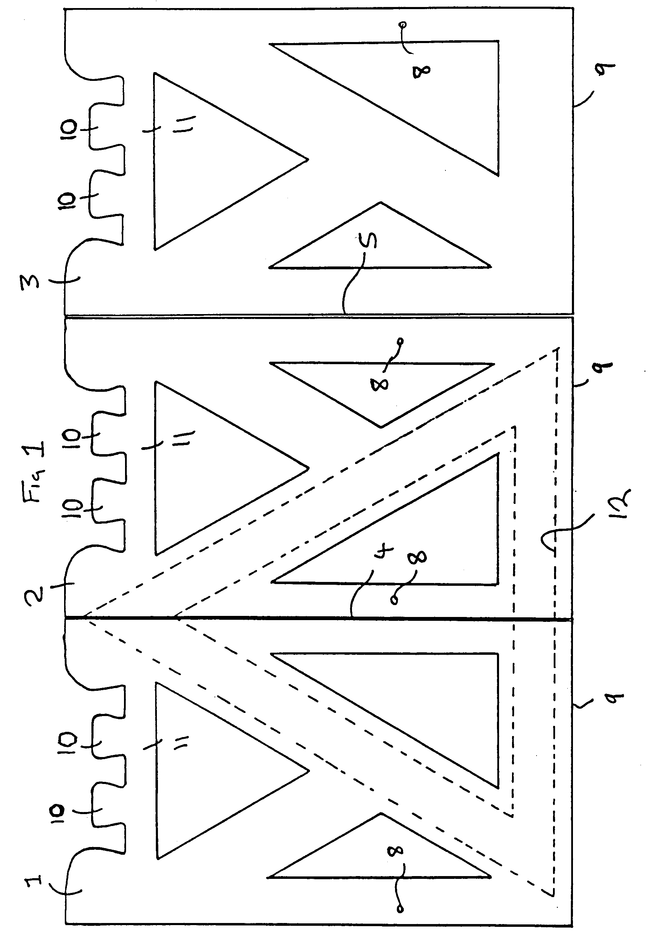

FIGURE 1 illustrates a set of wall members for use in a device according to the present invention;
FIGURE 2 is a front view showing a device according to the present invention in its use configuration;
FIGURE 3 is a plan view of the device shown in Figure 2;
FIGURE 4 shows a first alternative embodiment of the invention;
FIGURE 5 is a top plan view of the embodiment shown in Figure 4; and
FIGURES 6(a),(b),(c),(d) show a second alternative embodiment of the invention, Figure 6(a) being a perspective view and Figures 6(b),(c),(d) being side elevations showing the device at various stages of use.

Referring to the drawings, the device comprises three wall members 1-3 of which the end wall members 1,3 are each hingedly connected to a respective longitudinal edge of the centre wall member 2. The three wall members 1-3 may be integrally formed as a unit, e.g. by injection moulding, or may be formed as three separate units and interconnected after manufacture.

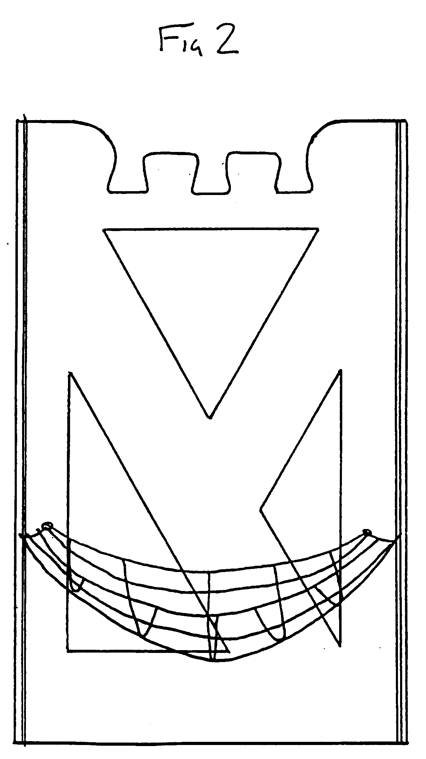

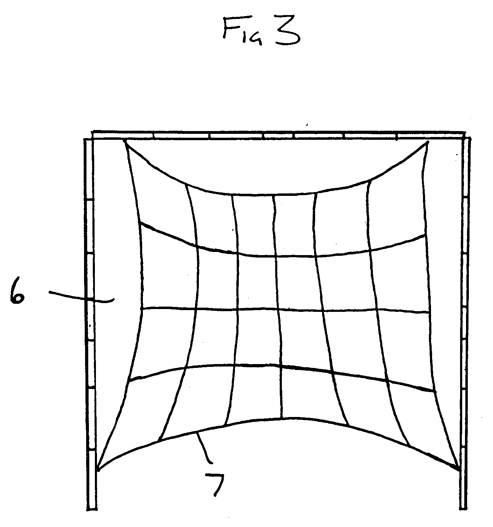

The hinge connections 4,5 between the wall members permit the wall members to be hinged concertina-fashion into a storage configuration in which the wall members lie atop one another. In this configuration the wall members occupy a minimum of space. The wall members may be manipulated from this storage configuration into a use configuration as illustrated in Figures 2 and 3. In this use configuration the wall members form an open sided enclosure 6 for receiving a load, e.g. a plastics carrier of shopping.

In order to support the load a flexible carrier 7 is provided which is connected or connectable to the wall members. If permanently connected to the wall members the flexible carrier is such as not materially to interfere with placing the wall members in the storage configuration. By way of example, apertures 8 may be provided in the wall members for the purpose of securing the flexible carrier 7 thereto. With the components in the configuration illustrated in Figures 2 and 3 a loaded bag may be placed on the flexible carrier. The effect of this load will be to deform the flexible carrier downwardly and at the same time to exert a tension on each of the wall members via the connection of the flexible carrier to the wall members. Preferably, the size and form of the flexible carrier is such that when loaded with a typical load the flexible carrier will deform downwardly so that the lower surface of the flexible carrier rests lightly on the surface upon which the wall members are standing via their bases 9. Suitable means, for example projections 10 are preferably provided at the top edge of each wall member for the purposes of securing the handles of a bag, if desired.

It has been found that if a storage device of the form illustrated is loaded with a bag eg: containing assorted groceries and the handles of the bag are secured to the projections 10 the load of the bag will tend to draw the wall members inwardly against the load to produce a rigid box like combination which can readily be grasped by means of handles 11 to carry the load, eg: from a car into a dwelling house. Further, the combination of load and support device will stand securely on the flat floor of a car and will resist movement of the load as a result of braking and cornering forces. Additional bags can be secured to the device on the outside of the wall members by attaching their handles to the projections 10 so that several bags can be supported by the same device.

In the illustrated embodiment of the invention a red warning triangle 12 of approved pattern is provided on the surface of the wall members 1 and 2. These wall members may be located co-planar and the third wall member 3 bent at an angle thereto to provide a support leg whereby the triangle may be displayed as a hazard warning triangle.

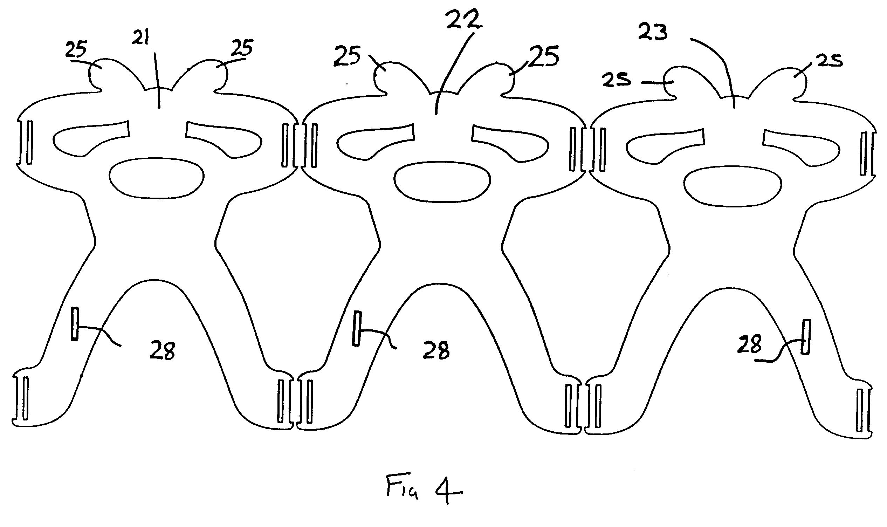

In the alternative embodiment of the invention shown in Figure 4 the wall members 21,22,23 are identical plastics mouldings. The centre wall member 22 is, in use, connected to the end wall members 21,23 by suitable hinges, eg: formed by straps or clips. The wall members have the form of generally open frame members comprising the minimum material for the required rigidity and strength. It will be noted that the wall members meet only at the locations of the two hinges. Slots 28 are provided, one in each wall member, at a position approximately one third of the height of the wall member from the base, in use.

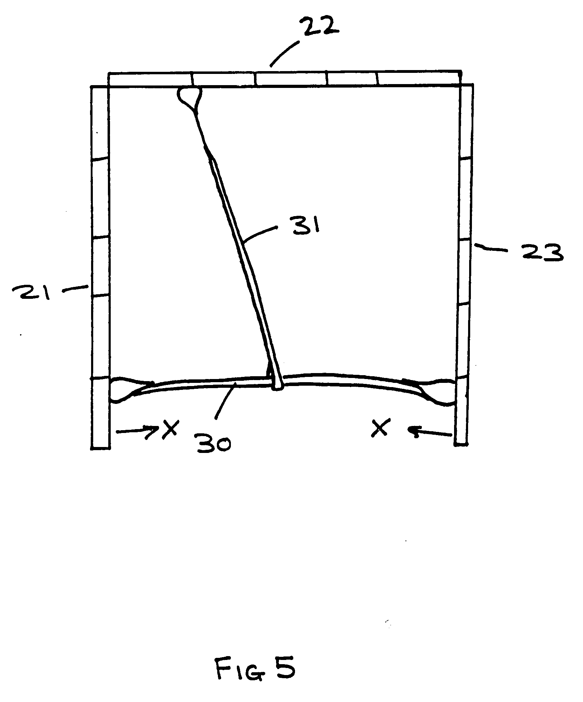

As shown in Figure 5, a substantially non-extensible strap 30 interconnects the end wall members 21,23 and an additional strap 31 connects the centre wall 22 to the strap 30. The straps 30,31 are attached to the respective wall members by being looped through the slots 28. The strap 31 is looped around the strap 30. The straps are sufficiently slack to enable the wall members to be folded concertina-like so that they lie parallel to each other, without the need to undo the straps.

As with the embodiment of the invention described above, with the carrier formed by the straps 30,31 attached to the wall members at a position over the base in use, a load placed on the carrier exerts a force on the walls so as to draw them inwardly in the direction of the arrows X shown in Figure 5. Additional bags can be secured to the device outside the wall members by looping their handles over the projections 25 formed on each of the wall members 21,22,23 and thus, several carrier bags can be anchored in the boot of a car to prevent them from moving or spilling in transit.

The strap 30 is preferably made adjustable so that the device can be adapted to the load it is to support. For example, it could have two free ends joined by a buckle or other suitable adjustment means. With the strap at its ideal length, when supporting items in a flexible carrier bag the end wall members just touch the load, the straps are just off the supporting surface and the items touch the support surface with the straps passing between them. The other strap 30 may likewise be adjustable.

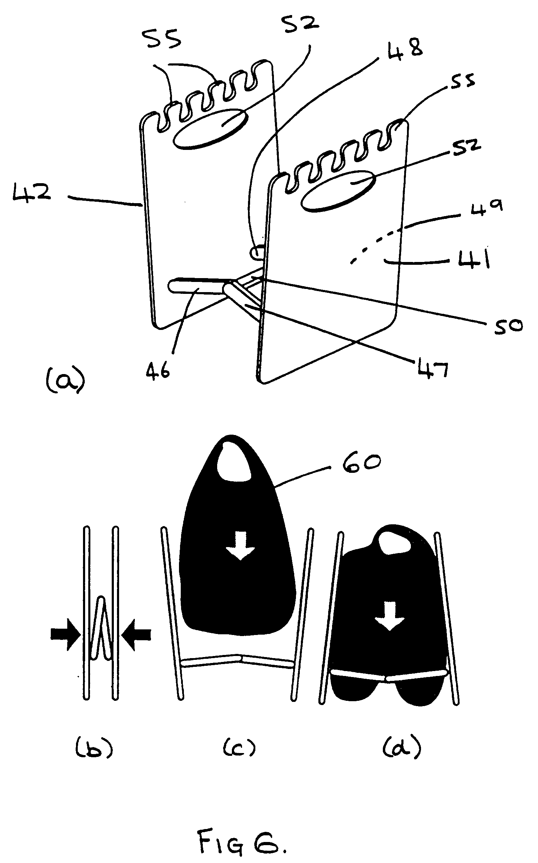

Figure 6 shows a further embodiment of the invention including two wall members 41,42, joined by a structure which itself acts as the carrier for the shopping bag or the like. The wall members are joined by two pairs of arms, 46,47 and 48,49 (49 is not visible in the drawings). The arms 46,47,48,49 are each pivotably connected to one wall member 41,42 at one end and to the other arm of the pair at its other end. The pairs are preferably joined together by an additional arm 50 extending between the pivot points where the arms are joined to each other.

The device of Figure 6 can be folded as shown in Figure 6(b) by pushing the wall members together so that it takes up a minimum amount of space. Holes 52 in each of the wall members act as carrying handles. The wall members are separated to enable positioning of a carrier bag 60 between them as shown in Figure 6(c). Once positioned, the weight of the articles in the carrier bag tends to cause the wall members to lead inwardly as shown in Figure 6(d). The arms 46,47,48,49 may be biased in some way so that the device springs to the position of Figure 6(b) when not in use. Additional bags may be attached to the device outside the wall members 41,41 by means of protrusions 55 provided along their upper edges. The wall members may be solid substantially rectangular members as shown or may have other shapes or may take the form of open framework similar to those of Figures 4 and 5. As with the embodiment of Figures 4 and 5, in the preferred configuration the carrier means remain above the support surface and the items in the carrier bag touch the support surface, as shown.

## Claims

1. A device for supporting shopping bags or the like comprising a support formed by a plurality of upstanding wall members (1-3) and collapsible carrier means (7) connected or connectable to the upstanding wall members characterised in that the upstanding wall members (1-3) have means (10) at their upper edges for supporting carrier bag handles and the upstanding wall members (1-3) are connected in use by the carrier means (7) such that with the upstanding wall members (1-3) positioned on a supporting surface a load placed on the carrier means (7) will impose at least a downwardly directed force component on at least some of the upstanding wall members (1-3) and will draw at least some of the upstanding wall members (1-3) towards the load.

2. A device as claimed in claim 1, in which the wall members (1-3) may be placed in a storage configuration in which they lie on top of one another.

3. A device as claimed in claim 1 or 2 which said wall members (1-3) are connected edge to edge and form an open sided enclosure when manipulated into a use configuration.

4. A device as claimed in claim 3 in which the wall members are hingedly (4-5) connected.

5. A device as claimed in claim 3 or 4 in which the carrier means (7) is positioned to impose, when bearing a load, an inwardly directed force on at least those wall members (1-3) located at the open edges of the enclosure.

6. A device as claimed in any of claims 1 to 5 including three wall members (1-3).

7. A device as claimed in any preceding claim in which the carrier means (7) are suspended from the upstanding wall members (1-3).

8. A device as claimed in any preceding claim in which the carrier means (7) are connected to at least two of the upstanding wall members (1-3) in use at positions above the support surface.

9. A device as claimed in any preceding claim in which the carrier means (7) are connected to at least two of the upstanding wall members (1-3) in use at positions below the vertical centre of the upstanding wall members.

10. A device as claimed in any preceding claim wherein the carrier means (7) comprise a net.

11. A device as claimed in any of claims 1 to 9 wherein the carrier means comprise at least one flexible band (30,31).

12. A device according to any preceding claim including means for adjusting the length of the or each band.

13. A device as claimed in any preceding claim including three or more wall members connected edge to edge, the device being foldable concertina-like to bring the wall members parallel without the need to detach the carrier means.

14. A device as claimed in any of claims 1 to 8 wherein the carrier means comprise a rigid collapsible structure.

15. A device as claimed in claim 13 wherein the carrier means comprise a foldable framework.

## Patentansprüche

1. Vorrichtung zur Aufnahme von Einkaufstaschen oder dergleichen, die eine Aufnahme umfaßt, die durch eine Vielzahl aufrechtstehender Wandelemente (1-3) und eine zusammenklappbare Trägereinrichtung (7) gebildet wird, die mit den aufrechtstehenden Wandelementen verbunden ist oder verbunden werden kann, **dadurch gekennzeichnet,** daß die aufrechtstehenden Wandelemente (1-3) an ihren Oberkanten Einrichtungen (10) zur Aufnahme von Tragetaschengriffen aufweisen und die aufrechtstehenden Wandelemente (1-3) in Funktion durch die Trägereinrichtung (7) so verbunden sind, daß, wenn die aufrechtstehenden Wandelemente (1-3) auf einer Standfläche angeordnet sind, eine auf der Trägereinrichtung (7) abgestellte Last wenigstens eine nach unten gerichtete Kraftkomponente auf wenigstens einige der aufrechtstehenden Wandelemente (1-3) ausübt und wenigstens einige der aufrechtstehenden Wandelemente (1-3) auf die Last zu zieht.

2. Vorrichtung nach Anspruch 1, wobei die Wandelemente (1-3) in eine Aufbewahrungsstellung gebracht werden können, in der sie aufeinanderliegen.

3. Vorrichtung nach Anspruch 1 oder 2, wobei die Wandelemente (1-3) Rand an Rand miteinander verbunden sind und eine Eingrenzung mit offener Seite bilden, wenn sie in eine Funktionsstellung gebracht werden.

4. Vorrichtung nach Anspruch 3, wobei die Wandelemente gelenkig (4-5) miteinander verbunden sind.

5. Vorrichtung nach Anspruch 3 oder 4, wobei die Trägereinrichtung (7) so angeordnet ist, daS sie, wenn sie eine Last trägt, eine nach innen gerichtete Kraft auf wenigstens die Wandelemente (1-3) ausübt, die sich an den offenen Rändern der Eingrenzung befinden.

6. Vorrichtung nach einem der Ansprüche 1 bis 5, die drei Wandelemente (1-3) enthält.

7. Vorrichtung nach einem der vorangehenden Ansprüche, wobei die Trägereinrichtung (7) an den aufrechtstehenden Wandelementen (1-3) aufgehängt ist.

8. Vorrichtung nach einem der vorangehenden Ansprüche, wobei die Trägereinrichtung (7) in Funktion mit wenigstens zwei der aufrechtstehenden Wandelemente (1-3) an Positionen oberhalb der Standfläche verbunden ist.

9. Vorrichtung nach einem der vorangehenden Ansprüche, wobei die Trägereinrichtung (7) in Funktion mit wenigstens zwei der aufrechtstehenden Wandelemente (1-3) an Positionen unterhalb des vertikalen Mittelpunkts der Wandelemente verbunden ist.

10. Vorrichtung nach einem der vorangehenden Ansprüche, wobei die Trägereinrichtung (7) ein Netz umfaßt.

11. Vorrichtung nach einem der Ansprüche 1 bis 9, wobei die Trägereinrichtung wenigstens ein flexibles Band (30,31) umfaßt.

12. Vorrichtung nach einem der vorangehenden Ansprüche, die eine Einrichtung zum Verstellen der Länge des oder jedes Bandes enthält.

13. Vorrichtung nach einem der vorangehenden Ansprüche, die drei oder mehr Wandelemente enthält, die Rand an Rand miteinander verbunden sind, wobei die Vorrichtung akkordeonartig zusammengeklappt werden kann, um die Wandelemente in parallele Stellung zu bringen, ohne daß die Trägereinrichtung gelöst werden muß.

14. Vorrichtung nach einem der Ansprüche 1 bis 8, wobei die Trägereinrichtung eine starre, zusammenklappbare Struktur umfaßt.

15. Vorrichtung nach Anspruch 13, wobei die Trägereinrichtung einen zusammenklappbaren Rahmen umfaßt.

## Revendications

1. Dispositif de support de sac à provisions ou analogues comprenant un support formé par une pluralité d'éléments parois verticaux (1 à 3) et par un moyen porteur repliable (7) qui est relié ou qui peut être relié aux éléments parois verticaux, caractérisé en ce que les éléments parois verticaux (1-3) comportent des moyens (10) au niveau de leur bordure supérieure destinés à supporter des poignées porteuses de sac et en ce que les éléments parois verticaux (1-3) sont reliés durant l'utilisation par le moyen porteur (7), de telle façon que les éléments parois verticaux (1-3) étant positionnés sur une surface de support, une charge placée sur le moyen porteur (7) va imposer au moins une composante de force dirigée vers le bas sur au moins certains des éléments paroi vertical (1-3) et va tirer au moins certains des éléments parois verticaux (1-3) vers la charge.

2. Dispositif selon la revendication 1, dans lequel les éléments parois (1-3) peuvent être mis en place dans une configuration de stockage dans laquelle ils se trouvent les uns sur les autres.

3. Dispositif selon la revendication 1 ou 2, dans lequel lesdits éléments parois (1-3) sont reliés bord à bord et constituent une enceinte ouverte de côté lorsqu'ils sont manoeuvrés pour obtenir une configuration d'utilisation.

4. Dispositif selon la revendication 3, dans lequel les éléments parois sont reliés par des charnières (4-5).

5. Dispositif selon la revendication 3 ou 4, dans lequel le moyen porteur 7 est positionné pour imposer, lorsqu'il soutient une charge, une force dirigée vers l'intérieur sur au moins ceux des éléments parois (1-3) qui sont situés au niveau des bords ouverts de l'enceinte.

6. Dispositif selon l'une quelconque des revendication 1 à 5 comprenant trois éléments parois (1-3).

7. Dispositif selon l'une quelconque des revendications précédentes, dans lequel le moyen porteur (7) est suspendu aux éléments parois verticaux (1-3).

8. Dispositif selon l'une quelconque des revendications précédentes, dans lequel le moyen porteur (7) est relié avec au moins deux des éléments parois verticaux (1-3) pendant l'utilisation, à des positions au dessus de la surface de support.

9. Dispositif selon l'une quelconque des revendications précédentes, dans lequel le moyen porteur (7) est relié à au moins deux des éléments parois verticaux (1-3) pendant l'utilisation, à des positions en dessous du centre vertical des éléments parois verticaux.

10. Dispositif selon l'une quelconque des revendications précédentes, dans lequel le moyen porteur (7) est constitué d' un filet.

11. Dispositif selon l'une quelconque des revendications 1 à 9, dans lequel le moyen porteur (7) comprend au moins un ruban souple (30-31).

12. Dispositif selon l'une quelconque des revendications précédentes comprenant des moyens pour ajuster la longueur du ruban ou de chaque ruban.

13. Dispositif selon l'une quelconque des revendications précédentes comprenant trois éléments parois ou plus reliés bord à bord, le dispositif étant repliable en accordéon pour amener les éléments parois à être parallèles sans avoir besoin de détacher le moyen porteur.

14. Dispositif selon l'une quelconque des revendications 1 à 8, dans lequel le moyens porteur est constitué d'une structure rigide repliable.

15. Dispositif selon la revendication 13, dans lequel le moyen porteur est constitué d'une ossature repliable.
